(19) Europäisches Patentamt
European Patent Office
Office européen des brevets

(11) EP 4 769 620 A1

(12) # EUROPEAN PATENT APPLICATION
published in accordance with Art. 153(4) EPC

(43) Date of publication:
**01.07.2026 Bulletin 2026/27**

(21) Application number: **23949985.8**

(22) Date of filing: **25.08.2023**

(51) International Patent Classification (IPC):
***H01M 10/0567*** *(2010.01)* ***H01M 10/0525*** *(2010.01)*

(52) Cooperative Patent Classification (CPC):
**H01M 10/0525; H01M 10/0567; H01M 10/0569;**
Y02E 60/10

(86) International application number:
**PCT/CN2023/114966**

(87) International publication number:
**WO 2025/043390 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventor: **XU, Qing**
**Ningde, Fujian 352100 (CN)**

(74) Representative: **Dehns Germany Partnerschaft mbB**
**Theresienstraße 6-8**
**80333 München (DE)**

(54) # ELECTROLYTE SOLUTION, ELECTROCHEMICAL DEVICE AND ELECTRONIC DEVICE

(57) This application provides an electrolyte, an electrochemical apparatus, and an electronic apparatus. The electrolyte includes at least two of an additive I, an additive II, or an additive III. The additive I is at least one additive selected from a group consisting of a compound represented by the following formula 1a, a compound represented by the following formula 1b, and lithium difluorophosphate;

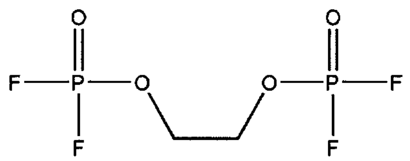

formula 1a;

and

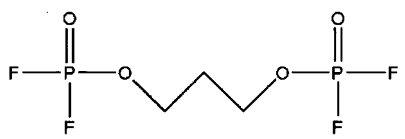

formula 1b.

The additive II is at least one additive selected from a group consisting of lithium fluorosulfonate, difluorosulfonimide, and bistrifluoromethane sulfonimide. The additive III is at least one additive selected from a group consisting of lithium difluorooxalate borate, lithium bisoxalate borate, and lithium tetrafluoroborate. The electrolyte provided in this application can improve the low-temperature performance and reduce the resistance and thickness swelling rate of electrochemical apparatuses.

EP 4 769 620 A1

## Description

### TECHNICAL FIELD

This application relates to the field of electrochemical energy storage, and specifically, to an electrolyte, an electrochemical apparatus, and an electronic apparatus.

### BACKGROUND

Electrochemical apparatuses (for example, lithium-ion batteries) have advantages such as high energy storage density, high open-circuit voltage, low self-discharge rate, long cycle life, and high safety. With the widespread use of electronic apparatuses, high-energy-density electrochemical apparatuses serving as power sources have been actively researched.

It is difficult for conventional non-aqueous electrolyte solutions to achieve good low-temperature output characteristics and high-temperature stability due to the formation of non-uniform solid electrolyte interface (SEI) films. Moreover, in the presence of electrolytic salt additives in the electrolyte, possible occurrence of side reactions caused by the electrolytic salt additives leads to an increase in irreversible capacity of the electrochemical apparatus.

### SUMMARY

This application provides an electrolyte. The electrolyte includes at least two of an additive I, an additive II, or an additive III. The additive I is at least one additive selected from a group consisting of a compound represented by the following formula 1a, a compound represented by the following formula 1b, and lithium difluorophosphate;

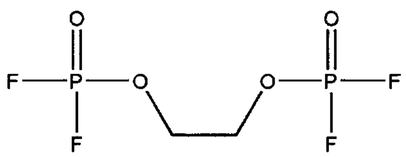

formula 1a;

and

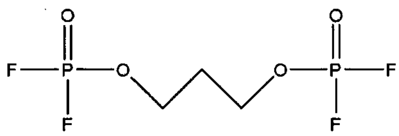

formula 1b.

The additive II is at least one additive selected from a group consisting of lithium fluorosulfonate, difluorosulfonimide, and bistrifluoromethane sulfonimide. The additive III is at least one additive selected from a group consisting of lithium difluorooxalate borate, lithium bisoxalate borate, and lithium tetrafluoroborate. The additives of the electrolyte provided in this application can form uniform solid electrolyte interface (SEI) film and cathode electrolyte interface (CEI) film, achieving good low-temperature performance, low resistance, and low thickness swelling rate.

In some embodiments, the additive I includes the compound represented by formula 1a, and the additive II includes lithium fluorosulfonate. In some embodiments, the additive I includes the compound represented by formula 1a, and the additive II includes difluorosulfonimide. In some embodiments, the additive I includes the compound represented by formula 1a, and the additive II includes bistrifluoromethane sulfonimide. In some embodiments, the additive I includes the compound represented by formula 1a, and the additive III includes lithium difluorooxalate borate. In some embodiments, the additive I includes the compound represented by formula 1a, and the additive III includes lithium bisoxalate borate. In some embodiments, the additive I includes the compound represented by formula 1a, and the additive III includes lithium tetrafluoroborate. In some embodiments, the additive I includes the compound represented by formula 1b, and the additive II includes lithium fluorosulfonate. In some embodiments, the additive I includes the compound represented by formula 1b, and the additive II includes difluorosulfonimide. In some embodiments, the additive I includes the compound represented by formula 1b, and the additive II includes bistrifluoromethane sulfonimide. In some embodiments, the additive I includes the compound represented by formula 1b, and the additive III includes lithium difluorooxalate borate. In some embodiments, the additive I includes the compound represented by formula 1b, and the additive III includes lithium bisoxalate borate. In some embodiments, the additive I includes the compound represented by

formula 1b, and the additive III includes lithium tetrafluoroborate. In some embodiments, the additive I includes lithium difluorophosphate, and the additive II includes lithium fluorosulfonate. In some embodiments, the additive I includes lithium difluorophosphate, and the additive II includes difluorosulfonimide. In some embodiments, the additive I includes lithium difluorophosphate, and the additive II includes bistrifluoromethane sulfonimide. In some embodiments, the additive I includes lithium difluorophosphate, and the additive III includes lithium difluorooxalate borate. In some embodiments, the additive I includes lithium difluorophosphate, and the additive III includes lithium bisoxalate borate. In some embodiments, the additive I includes lithium difluorophosphate, and the additive III includes lithium tetrafluoroborate. Conventional additive compositions may decompose incompletely under low-temperature or high-temperature conditions. An electrolyte including the forgoing additives can ensure good low-temperature performance, low resistance, and low thickness swelling rate of electrochemical apparatuses.

In some embodiments, a mass percentage of the additive I in the electrolyte is a, and $0.01\% \leq a \leq 5\%$. In some embodiments, a mass percentage of the additive II in the electrolyte is b, and $0.01\% \leq b \leq 5\%$. In some embodiments, a mass percentage of the additive III in the electrolyte is c, and $0.01\% \leq c \leq 5\%$. In some embodiments, a is 0.1%, 0.2%, 0.3%, 1%, 1.6%, 2.5%, 3%, 3.2%, or within a range defined by any two of the values. In some embodiments, b is 0.05%, 0.1%, 0.2%, 0.3%, 1%, 1.3%, 2%, or within a range defined by any two of the values. In some embodiments, c is 0.05%, 0.1%, 0.2%, or within a range defined by any two of the values. The percentages of the additives in the electrolyte being within the foregoing ranges allow for SEI and CEI films having various compositions that can significantly increase the low-temperature capacity retention rate of the electrochemical apparatus and achieve a better effect in reducing the resistance and thickness swelling rate.

In some embodiments, when the electrolyte includes the additive I and the additive II, $0.1 \leq a/b \leq 50$. In some embodiments, when the electrolyte includes the additive II and the additive III, $0.1 \leq b/c \leq 50$. In some embodiments, when the electrolyte includes the additive I and the additive III, $0.1 \leq a/c \leq 50$. In some embodiments, when the electrolyte includes the additive I and the additive II, $0.1 \leq a/b \leq 40$. In some embodiments, when the electrolyte includes the additive II and the additive III, $0.1 \leq b/c \leq 40$. In some embodiments, when the electrolyte includes the additive I and the additive III, $0.5 \leq a/c \leq 45$. The electrolyte additive compositions satisfying the foregoing proportional relationships can further avoid occurrence of side reactions and allows for the SEI and CEI films that have an appropriate thickness, improving the cycling performance of the electrochemical apparatus and reducing the resistance.

In some embodiments, the electrolyte further includes an organic solvent, and the organic solvent includes at least one of ethyl propionate or propyl propionate. In some embodiments, a mass percentage of ethyl propionate in the electrolyte is 20% to 60%. In some embodiments, a mass percentage of propyl propionate in the electrolyte is 32% to 47%. The electrolyte satisfying the foregoing condition can effectively inhibit decomposition and dissolution of transition metals and reduce performance fluctuation of the electrochemical apparatus at different temperatures.

In some embodiments, the electrolyte further includes an additive IV represented by formula 2,

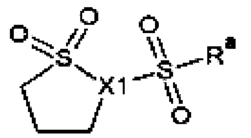

formula 2,

where X1 is CH or N, and $R^a$ is a substituted or unsubstituted $C_1$-$C_{20}$ alkyl group.

In some embodiments, a mass percentage of the additive IV in the electrolyte is 0.01% to 4%. In some embodiments, a mass percentage of the additive IV in the electrolyte is 1.2% to 1.9%. The additive IV has good low-temperature stability and high-temperature stability and provides a positive effect without increasing the viscosity of the electrolyte, further reducing the resistance. In some embodiments, the electrolyte further includes at least one of $LiPF_6$, $LiSbF_6$, $LiAsF_6$, $LiClO_4$, $LiN(C_2F_5SO_2)_2$, $CF_3SO_3Li$, $LiC(CF_3SO_2)_3$, or $LiC_4BO_8$.

This application further provides an electrochemical apparatus including the foregoing electrolyte.

This application further provides an electronic apparatus including the foregoing electrochemical apparatus.

The electrolyte provided in this application can improve the effect of formation of solid electrolyte interfaces (SEI) on the surface of positive and negative electrodes and thus enhances interface passivation and allows for good stability under both low-temperature and high-temperature conditions. As a result, better low-temperature performance and lower resistance and thickness swelling rate can be achieved for the electrochemical apparatus.

## DESCRIPTION OF EMBODIMENTS

The following embodiments can help persons skilled in the art understand this application more comprehensively, but do not limit this application in any manner.

This application provides an electrolyte. The electrolyte includes at least two of an additive I, an additive II, or an additive III. In some embodiments, the additive I is at least one additive selected from a group consisting of a compound represented by the following formula 1a, a compound represented by the following formula 1b, and lithium difluorophosphate;

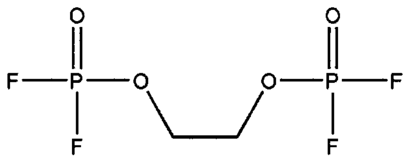

formula 1a;

and

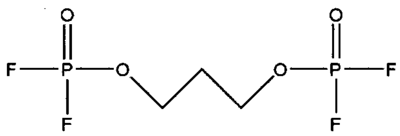

formula 1b.

In some embodiments, the additive II is at least one additive selected from a group consisting of lithium fluorosulfonate, difluorosulfonimide, and bistrifluoromethane sulfonimide. In some embodiments, the additive III is at least one additive selected from a group consisting of lithium difluorooxalate borate, lithium bisoxalate borate, and lithium tetrafluoroborate. The use of at least two of the additive I, the additive II, or the additive III in the electrolyte can improve the effect of formation of solid electrolyte interfaces (SEI) on the surface of positive and negative electrodes and thus enhances interface passivation. As a result, better low-temperature performance and lower resistance and thickness swelling rate can be achieved for the electrochemical apparatus.

In some embodiments, the electrolyte includes the additive I and the additive II, where the additive I includes the compound represented by formula 1a, and the additive II includes lithium fluorosulfonate. In some embodiments, the electrolyte includes the additive I and the additive II, where the additive I includes the compound represented by formula 1a, and the additive II includes difluorosulfonimide. In some embodiments, the electrolyte includes the additive I and the additive II, where the additive I includes the compound represented by formula 1a, and the additive II includes bistrifluoromethane sulfonimide. In some embodiments, the electrolyte includes the additive I and the additive III, where the additive I includes the compound represented by formula 1a, and the additive III includes lithium difluorooxalate borate. In some embodiments, the electrolyte includes the additive I and the additive III, where the additive I includes the compound represented by formula 1a, and the additive III includes lithium bisoxalate borate. In some embodiments, the electrolyte includes the additive I and the additive III, where the additive I includes the compound represented by formula 1a, and the additive III includes lithium tetrafluoroborate. In some embodiments, the electrolyte includes the additive I and the additive II, where the additive I includes the compound represented by formula 1b, and the additive II includes lithium fluorosulfonate. In some embodiments, the electrolyte includes the additive I and the additive II, where the additive I includes the compound represented by formula 1b, and the additive II includes difluorosulfonimide. In some embodiments, the electrolyte includes the additive I and the additive II, where the additive I includes the compound represented by formula 1b, and the additive II includes bistrifluoromethane sulfonimide. In some embodiments, the electrolyte includes the additive I and the additive III, where the additive I includes the compound represented by formula 1b, and the additive III includes lithium difluorooxalate borate. In some embodiments, the electrolyte includes the additive I and the additive III, where the additive I includes the compound represented by formula 1b, and the additive III includes lithium bisoxalate borate. In some embodiments, the electrolyte includes the additive I and the additive III, where the additive I includes the compound represented by formula 1b, and the additive III includes lithium tetrafluoroborate. In some embodiments, the electrolyte includes the additive I and the additive II, where the additive I includes lithium difluorophosphate, and the additive II includes lithium fluorosulfonate. In some embodiments, the electrolyte includes the additive I and the additive II, where the additive I includes lithium difluorophosphate, and the additive II includes difluorosulfonimide. In some embodiments, the electrolyte includes the additive I and the additive II, where the additive I includes lithium difluorophosphate, and the additive II includes bistrifluoromethane sulfonimide. In some embodiments, the electrolyte includes the additive I and the additive III, where the additive I includes lithium difluorophosphate, and the additive III includes lithium difluorooxalate borate. In some embodiments, the electrolyte includes the additive I and the additive III, where the additive I includes lithium difluorophosphate, and the additive III includes lithium bisoxalate borate. In some embodiments, the electrolyte includes the additive I and the additive III, where the additive I includes lithium difluorophosphate, and the additive III includes lithium tetrafluoroborate. The foregoing additive combinations can improve film formation stability,

enhance interface passivation, and further reduce occurrence of side reactions, thus helping to improve the low-temperature performance and reduce the resistance and thickness swelling rate of the electrochemical apparatus.

In some embodiments, a mass percentage of the additive I in the electrolyte is a, and 0.01%≤a≤5%. In some embodiments, a mass percentage of the additive II in the electrolyte is b, and 0.01%≤b≤5%. In some embodiments, a mass percentage of the additive III in the electrolyte is c, and 0.01%≤c≤5%. Controlling the mass percentages of the additive I, additive II, and additive III within the foregoing ranges can improve the stability of the electrochemical apparatus, thus improving the low-temperature performance and reducing the resistance and thickness swelling rate of the electrochemical apparatus.

In some embodiments, the mass percentage of the additive I in the electrolyte is a, and a is 0.1%, 0.2%, 0.3%, 1%, 1.6%, 2.5%, 3%, 3.2%, or within a range defined by any two of the values. In some embodiments, the mass percentage of the additive II in the electrolyte is b, and b is 0.05%, 0.1%, 0.2%, 0.3%, 1%, 1.3%, 2%, or within a range defined by any two of the values. In some embodiments, the mass percentage of the additive III in the electrolyte is c, and c is 0.05%, 0.1%, 0.2%, or within a range defined by any two of the values. Controlling the mass percentage of the additive I, additive II, or additive III within the foregoing ranges allows for synergistic action of different additives as well as formation of uniform SEI and CEI films having various compositions, and thus the electrochemical apparatus has better low-temperature performance and lower resistance and thickness swelling rate.

In some embodiments, when the electrolyte includes the additive I and the additive II, 0.1≤a/b≤50. Limiting the mass percentages of the additive I and additive II to the foregoing ratio helps to improve the low-temperature performance and reduce the resistance and thickness swelling rate of the electrochemical apparatus. In some embodiments, when the electrolyte includes the additive II and the additive III, 0.1≤b/c≤50. Limiting the mass percentages of the additive II and additive III to the foregoing ratio helps to improve the low-temperature performance and reduce the resistance and thickness swelling rate of the electrochemical apparatus. In some embodiments, when the electrolyte includes the additive I and the additive III, 0.1≤a/c≤50. Limiting the mass percentages of the additive I and additive III to the foregoing ratio helps to improve the low-temperature performance and reduce the resistance and thickness swelling rate of the electrochemical apparatus. In some embodiments, when the electrolyte includes the additive I and the additive II, 0.1≤a/b≤40. In some embodiments, when the electrolyte includes the additive II and the additive III, 0.1≤b/c≤40. In some embodiments, when the electrolyte includes the additive I and the additive III, 0.5≤a/c≤45. Limiting the mass percentages of the additive I, additive II, and additive III to the foregoing ratios allows for better low-temperature performance and lower resistance and thickness swelling rate of the electrochemical apparatus.

In some embodiments, the electrolyte further includes an organic solvent, and the organic solvent includes at least one of ethyl propionate (EP) or propyl propionate (PP). In some embodiments, a mass percentage of ethyl propionate in the electrolyte is 20% to 60%. In some embodiments, a mass percentage of propyl propionate in the electrolyte is 32% to 47%. Limiting the mass percentage of ethyl propionate or propyl propionate in the electrolyte within the foregoing ranges can improve the low-temperature performance and reduce the resistance and thickness swelling rate of the electrochemical apparatus.

In some embodiments, the electrolyte further includes an additive IV represented by formula 2,

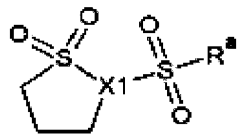

formula 2,

where X1 is CH or N, and $R^a$ is a substituted or unsubstituted $C_1$-$C_{20}$ alkyl group. In some embodiments, the alkyl group may be a linear alkyl group or a branched alkyl group. Non-limiting examples of the linear alkyl group include substituted or unsubstituted methyl, substituted or unsubstituted ethyl, substituted or unsubstituted propyl, substituted or unsubstituted butyl, substituted or unsubstituted pentyl, substituted or unsubstituted hexyl, substituted or unsubstituted heptyl, substituted or unsubstituted octyl, substituted or unsubstituted nonyl, substituted or unsubstituted decyl, substituted or unsubstituted dodecyl, and the like. Non-limiting examples of the branched alkyl group include substituted or unsubstituted isopropyl, substituted or unsubstituted sec-butyl, substituted or unsubstituted isobutyl, substituted or unsubstituted neopentyl, substituted or unsubstituted isoamyl, and the like. In addition, the substituted alkyl group may be a fluorine substituted alkyl group. The substituted alkyl group may be substituted at the middle of alkyl or at the tail of alkyl. In other words, the substituted alkyl group is an alkyl group with at least one hydrogen being substituted by fluorine, for example, $-(CF_2)_n-CF_3$ (n is an integer of 0 to 20).

In some examples, a specific example of formula 2 may be formula 2a or formula 2b shown as follows:

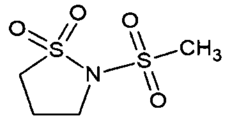

formula 2a;

and

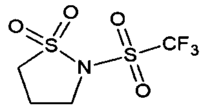

formula 2b.

The additive IV represented by formula 2 can decompose to form a stable passivation film on the surface of a negative electrode, and the passivation film has improved lithium ion transport properties and remains stable during low-temperature and room-temperature storage, so that gas production is inhibited and improved swelling suppression performance is exhibited.

In some embodiments, a mass percentage of the additive IV in the electrolyte is 0.01% to 4%. Controlling the mass percentage of the additive IV within the foregoing range can significantly improve the low-temperature performance and reduce the resistance of the electrochemical apparatus as well as reduce the thickness swelling rate of the electrochemical apparatus. In some embodiments, a mass percentage of the additive IV in the electrolyte is 1.2% to 1.9%. In this case, the electrochemical apparatus has lower resistance and thickness swelling rate.

In some embodiments, the electrolyte further includes an ionizable lithium salt, and the ionizable lithium salt includes at least one of $LiPF_6$, $LiSbF_6$, $LiAsF_6$, $LiClO_4$, $LiN(C_2F_5SO_2)_2$, $CF_3SO_3Li$, $LiC(CF_3SO_2)_3$, or $LiC_4BO_8$. The concentration of the ionizable lithium salt in the electrolyte is not particularly limited, preferably greater than 0.5 mol/L, more preferably greater than 0.8 mol/L, and further preferably greater than 1.0 mol/L. In addition, the concentration is preferably less than 3 mol/L, more preferably less than 2 mol/L, further preferably less than 1.8 mol/L, and particularly preferably less than 1.6 mol/L. An excessively low concentration of these ionizable lithium salts may result in insufficient conductivity of the electrolyte. In addition, an excessively high concentration of these ionizable lithium salts may result in an increase in the viscosity of the electrolyte and accordingly results in a decrease in the conductivity, thus possibly causing performance degradation of the electrochemical apparatus.

In some embodiments, the electrolyte further includes at least one of fluoroether, fluoroethylene carbonate, or ether nitrile. In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

This application further provides an electrochemical apparatus including the foregoing electrolyte. In some embodiments, the electrochemical apparatus further includes a positive electrode plate, a negative electrode plate, and a separator, where the positive electrode plate and the negative electrode plate are separated by the separator disposed

therebetween. In some embodiments, the positive electrode plate includes a positive electrode current collector and a positive electrode active material layer disposed on the positive electrode current collector; the positive electrode active material layer may include a positive electrode active material; the negative electrode plate includes a negative electrode current collector and a negative electrode active material layer disposed on the negative electrode current collector; and the negative electrode active material layer may include a negative electrode active material.

In some embodiments, the negative electrode plate may include a negative electrode current collector and a negative electrode active material layer disposed on the negative electrode current collector. The negative electrode active material layer may be disposed on one side or two sides of the negative electrode current collector. In some embodiments, the negative electrode current collector may be at least one of a copper foil current collector, a nickel foil current collector, or a carbon-based current collector. In some embodiments, the negative electrode current collector may have a thickness of 1 μm to 200 μm. In some embodiments, the negative electrode active material layer may be applied on only a partial region of the negative electrode current collector. In some embodiments, the negative electrode active material layer may have a thickness of 10 μm to 500 μm. It should be understood that this is merely an example, and any other suitable thickness may be adopted.

In some embodiments, as described above, the negative electrode active material layer includes a negative electrode active material. In some embodiments, the negative electrode active material includes at least one of natural graphite, artificial graphite, or a silicon-based material. In some embodiments, the silicon-based material includes at least one of silicon, a silicon-oxygen compound, a silicon-carbon compound, or a silicon alloy.

In some embodiments, the negative electrode active material layer may further include a negative electrode conductive agent and/or a negative electrode binder. The negative electrode conductive agent may include at least one of carbon black, acetylene black, Ketjen black, graphene, carbon nanotubes, or carbon fiber. In some embodiments, the negative electrode binder may include at least one of carboxymethyl cellulose (CMC), polyacrylic acid, polyacrylate, polyacrylic ester, polyvinylpyrrolidone, polyimide, polyamideimide, polysiloxane, or styrene butadiene rubber. It should be understood that the materials disclosed above are merely examples, and the negative electrode active material layer may be made of any other suitable material. In some embodiments, a mass ratio of the negative electrode active material, the negative electrode conductive agent, and negative electrode binder in the negative electrode active material layer may be (80-99):(0.5-10):(0.5-10). It should be understood that this is merely an example and is not intended to limit this application.

In some embodiments, the positive electrode plate includes a positive electrode current collector and a positive electrode active material layer disposed on the positive electrode current collector. The positive electrode active material layer may be located on one side or two sides of the positive electrode current collector. In some embodiments, the positive electrode current collector may be an aluminum foil, and certainly may be other positive electrode current collectors commonly used in the art. In some embodiments, the positive electrode current collector may have a thickness of 1 μm to 200 μm. In some embodiments, the positive electrode active material layer may be applied on only a partial region of the positive electrode current collector. In some embodiments, the positive electrode active material layer may have a thickness of 10 μm to 500 μm. It should be understood that this is merely an example, and any other suitable thickness may be adopted.

In some embodiments, as described above, the positive electrode active material layer includes a positive electrode active material. In some embodiments, the positive electrode active material may include at least one of lithium cobaltate, lithium manganate, lithium iron phosphate, lithium iron manganese phosphate, lithium nickel cobalt manganate, lithium nickel cobalt aluminate, or lithium nickel manganate, and the positive electrode active material may undergo doping and/or coating processing.

In some embodiments, the positive electrode active material layer further includes a positive electrode binder and a positive electrode conductive agent. In some embodiments, the positive electrode binder may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylic ester, polyacrylic acid, polyacrylate, sodium carboxymethyl cellulose, polyvinyl acetate, polyvinylpyrrolidone, polyvinyl ether, polytetrafluoroethylene, or polyhexafluoropropylene. In some embodiments, the positive electrode conductive agent may include at least one of conductive carbon black, acetylene black, Ketjen black, graphene, carbon nanotubes, or carbon fibers. In some embodiments, a mass ratio of the positive electrode active material, the positive electrode conductive agent, and the positive electrode binder in the positive electrode active material layer may be (80-98):(0.5-10):(0.5-10). It should be understood that the descriptions above are merely examples, and any other suitable material, thickness, and mass ratio may be adopted for the positive electrode active material layer.

In some embodiments, the separator includes at least one of polyethylene, polypropylene, polyvinylidene fluoride, polyethylene terephthalate, polyimide, or aramid. For example, polyethylene is at least one selected from high-density polyethylene, low-density polyethylene, or ultrahigh-molecular-weight polyethylene. Especially, polyethylene and polypropylene have a good effect on preventing short circuits and can improve the stability of batteries through a shutdown effect. In some embodiments, the separator has a thickness within a range of approximately 3 μm to 500 μm.

In some embodiments, the separator may further include a porous layer on the surface. The porous layer is

disposed on at least one surface of the separator and includes inorganic particles and a binder, where the inorganic particles are at least one selected from aluminum oxide ($Al_2O_3$), silicon dioxide ($SiO_2$), magnesium oxide (MgO), titanium oxide ($TiO_2$), hafnium dioxide ($HfO_2$), stannic oxide ($SnO_2$), cerium dioxide ($CeO_2$), nickel oxide (NiO), zinc oxide (ZnO), calcium oxide (CaO), zirconium dioxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, the separator has a pore diameter within a range of approximately 0.01 μm to 1 μm. The binder in the porous layer is at least one selected from polyvinylidene fluoride, a vinylidene fluoride-hexafluoropropylene copolymer, polyamide, polyacrylonitrile, polyacrylic ester, polyacrylic acid, polyacrylate, sodium carboxymethyl cellulose, polyvinylpyrrolidone, polyvinyl ether, polytetrafluoroethylene, or polyhexafluoropropylene. The porous layer on the surface of the separator can improve heat resistance, oxidation resistance, and electrolyte infiltration performance of the separator, and enhances adhesion between the separator and the electrode plates.

In some embodiments, the electrochemical apparatus is a lithium-ion battery, but this application is not limited thereto.

In some embodiments of this application, a lithium-ion battery is used as an example. A positive electrode plate, a separator, and a negative electrode plate are wound or stacked in sequence to form an electrode assembly, and then the electrode assembly is packaged into a housing, for example, an aluminum-plastic film, followed by electrolyte injection, formation and packaging to obtain a lithium-ion battery.

An embodiment of this application further provides an electronic apparatus including the foregoing electrochemical apparatus. The electronic apparatus in this embodiment of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

Some specific examples and comparative examples are listed below to better illustrate this application. Lithium-ion batteries are used as examples.

Preparation of lithium-ion battery

Preparation of positive electrode plate: A positive electrode active material lithium cobaltate, a conductive agent conductive carbon black, and a binder polyvinylidene fluoride (PVDF) were mixed at a weight ratio of 96.6:1.5:1.9, added with N-methylpyrrolidone (NMP), and well stirred in a vacuum mixer to obtain a positive electrode slurry, where the positive electrode slurry had a solid content of 75wt%. The positive electrode slurry was uniformly applied onto one side surface of an aluminum foil positive electrode current collector with a thickness of 10 μm; the aluminum foil positive electrode current collector was dried at 120°C to obtain a positive electrode plate having a single surface coated with a positive electrode active material layer with a thickness of 80 μm; the foregoing steps were repeated on another side surface of the aluminum foil positive electrode current collector to obtain a positive electrode plate with two surfaces coated with the positive electrode active material layers; and then cold pressing, cutting, and slitting were performed to obtain a positive electrode plate with dimensions of 470 mm×92 mm.

Preparation of negative electrode plate: A negative electrode active material artificial graphite, a conductive agent acetylene black, a binder styrene butadiene rubber (SBR), and a thickener sodium carboxymethyl cellulose (CMC) were mixed at a weight ratio of 96.5:1.5:1:1, added with deionized water, and well stirred in a vacuum mixer to obtain a negative electrode slurry, where the negative electrode slurry had a solid content of 75wt%. The negative electrode slurry was uniformly applied onto one side surface of a copper foil negative electrode current collector; the copper foil negative electrode current collector was dried at 120°C to obtain a negative electrode plate having a single surface coated with a negative electrode active material layer with a thickness of 90 μm; the foregoing steps were repeated on another side surface of the copper foil negative electrode current collector to obtain a negative electrode plate with two surfaces coated with the negative electrode active material layers; and then cold pressing, cutting, and slitting were performed to obtain a negative electrode plate with dimensions of 476 mm×93.5 mm.

Preparation of separator: A polyethylene (PE) micro-porous film having a thickness of 10 μm was used as the separator.

Preparation of electrolyte: In an argon glove box with a water content less than 10 ppm, ethylene carbonate (EC for short), propylene carbonate (PC for short), and diethyl carbonate (DEC for short) were mixed at a mass ratio of 1:1:1 to obtain a base solvent, then a lithium salt $LiPF_6$ and an additive were added into the base solvent, and a resulting mixture was well mixed to obtain an electrolyte, where based on mass of the electrolyte, a mass percentage of the $LiPF_6$ was 12.5%. The examples differed in that the additives used in the electrolyte were different in type and/or percentage, specific

types of the additives and their mass percentages in the electrolyte were shown in the following Table 1 to Table 4, and the percentages of the additives were mass percentages calculated based on a total mass of the electrolyte. Corresponding abbreviations of some of the additives are as follows: lithium difluorophosphate ($LiPO_2F_2$), lithium difluorooxalate borate (LiDFOB), lithium bisoxalate borate (LiBOB), lithium tetrafluoroborate ($LiBF_4$), lithium fluorosulfonate ($LiSO_3F$), lithium bistrifluoromethane sulfonimide (LiTFSI), and difluorosulfonimide (LiFSI).

Preparation of lithium-ion battery: The positive electrode plate, the separator, and the negative electrode plate were stacked in sequence so that the separator was disposed between the positive electrode plate and the negative electrode plate for separation, and then were wound to obtain an electrode assembly; the electrode assembly was placed into an outer packaging aluminum-plastic film after tab welding, and dehydrated at 80°C; and the electrolyte was injected, followed by processes such as vacuum packaging, standing, formation, trimming, and capacity testing to obtain a lithium-ion battery.

Test method is as follows:

(1) Low-temperature cycling test at -10°C

The lithium-ion battery was placed in a -10°C thermostat and left standing for 30 minutes to make the lithium-ion battery reach a constant temperature. The lithium-ion battery having reached a constant temperature was charged to 4.5 V at a constant current of 0.2C at -10°C, charged to 0.05C at a constant voltage of 4.5 V, left standing for 5 minutes, discharged to 3.0 V at a constant current of 0.2C, and left standing for 5 minutes, and then an initial capacity C11 was measured; subsequently, the lithium-ion battery was charged to 4.2 V at a constant current of 0.5C, and charged to a current of 0.3C at a constant voltage of 4.2 V; then, the lithium-ion battery was charged to 4.25 V at a constant current of 0.3C, charged to a current of 0.05C at a constant voltage of 4.5 V, and left for 5 minutes; and then, the lithium-ion battery was discharged to 3.0 V at a constant current of 0.2C and left standing for 5 minutes. This was one charge and discharge cycle. Charge/discharge was performed in this way for testing a discharge capacity C12 of the lithium-ion battery after 200 cycles and calculating a capacity retention rate of the lithium-ion battery after 200 cycles.

$$\text{Capacity retention rate after 200 cycles at } -10°C = C12/C11 \times 100\%.$$

(2) Direct-current resistance (DCR) test

At 25°C, the lithium-ion battery was charged to 4.48 V at a constant current of 0.7C, charged to a current of 82.5 mAh at a constant voltage of 4.48 V, and then discharged at a constant current of 0.2C for 4 h to make the lithium-ion battery have a charge of state (SOC) of 20%; and after this cycle was ended, the lithium-ion battery was discharged to 20% SOC according to the foregoing same charge and discharge steps, and then direct-current resistances (DCR) were measured respectively.

Test method: Discharge was performed at 0.1C for 10s to obtain a voltage of V0; and discharge was performed at 1C for 1s to obtain a voltage V1. DCR=(V0-V1)/0.1C.

DCR change rate at 20% SOC after 1000 cycles at 25°C: (DCR (after 1000 cycles at 25°C)/DCR (in initial state at 25°C)-1)×100%.

(3) Test of thickness swelling rate after storage

The lithium-ion battery was placed in a 25°C thermostat and left standing for 30 min to make the lithium-ion battery reach a constant temperature. The lithium-ion battery having reached a constant temperature was charged to 4.48 V at a constant current of 0.7C and then charged to 82.5 mA at a constant voltage of 4.48 V, and the thickness of the lithium-ion battery was measured and recorded as T0; the lithium-ion battery was placed in a 85°C oven for 8 h and cooled for 1 h, the thickness of the lithium-ion battery was measured as T1, and the thickness of the lithium-ion battery in the oven was monitored in real time. Thickness swelling rate of lithium-ion battery after storage at 85°C for 6 h=(T1-T0)/T0×100%.

Table 1 shows parameters and evaluation results of Examples 1 to 8 and Comparative examples 1 to 10.

Table 1

| | Additive I | | Additive II | | Additive III | | Cycling capacity retention rate at -10°C (%) | Cycling resistance growth rate (%) | Thickness swelling rate (%) |
|---|---|---|---|---|---|---|---|---|---|
| | Material | Mass percentage (%) | Material | Mass percentage (%) | Material | Mass percentage (%) | | | |
| Comparative example 1 | - | | - | | - | | 61.5 | 46.3 | 33.2 |
| Comparative example 2 | formula 1a | 0.5 | - | | - | | 73.1 | 37.8 | 27.3 |
| Comparative example 3 | formula 1b | 0.5 | - | | - | | 71.8 | 38.2 | 28.1 |
| Comparative example 4 | $LiPO_2F_2$ | 0.5 | | | | | 72.9 | 37.6 | 27.2 |
| Comparative example 5 | - | | $LiSO_3F$ | 0.5 | - | | 72.6 | 38.0 | 27.0 |
| Comparative example 6 | - | | LiTFSI | 0.5 | - | | 72.2 | 38.4 | 28.2 |
| Comparative example 7 | - | | LiFSI | 0.5 | - | | 71.9 | 37.9 | 27.9 |
| Comparative example 8 | - | | - | | $LiBF_4$ | 0.5 | 71.6 | 39.1 | 27.7 |
| Comparative example 9 | - | | - | | LiDFOB | 0.5 | 72.1 | 38.7 | 28.1 |
| Comparative example 10 | - | | - | | LiBOB | 0.5 | 72.5 | 38.3 | 27.8 |
| Example 1 | formula 1a | 0.3 | $LiSO_3F$ | 0.2 | - | | 75.7 | 35.6 | 26.5 |
| Example 2 | formula 1a | 0.3 | - | | LiBOB | 0.2 | 76.2 | 35.1 | 26.9 |
| Example 3 | - | | $LiSO_3F$ | 0.3 | LiBOB | 0.2 | 75.3 | 35.9 | 27.2 |
| Example 4 | $LiPO_2F_2$ | 0.3 | LiTFSI | 0.2 | | | 75.8 | 35.4 | 26.7 |
| Example 5 | $LiPO_2F_2$ | 0.3 | LiFSI | 0.2 | | | 76.0 | 35.2 | 26.6 |
| Example 6 | $LiPO_2F_2$ | 0.3 | | | $LiBF_4$ | 0.2 | 75.9 | 35.5 | 26.8 |
| Example 7 | $LiPO_2F_2$ | 0.3 | | | LiDFOB | 0.2 | 76.1 | 35.3 | 26.9 |
| Example 8 | formula 1a | 0.2 | $LiSO_3F$ | 0.1 | LiBOB | 0.2 | 76.5 | 35.7 | 26.6 |
| "-" indicates that such material is not added. | | | | | | | | | |

The additive I can form secure SEIs on the positive and negative electrodes for improving the low-temperature performance and reducing the resistance and thickness swelling rate of the electrochemical apparatus. The additive II is used for improving the low-temperature performance of the electrolyte. The additive III is used for improving the low-temperature performance of the electrolyte. From the comparison between Examples 1 to 8 and Comparative examples 1 to 10, it can be learned that compared with the absence of the additive I, additive II and additive III, or the presence of only one of the additive I, additive II or additive III, the presence of at least two of the additive I, additive II or additive III in the electrolyte can significantly improve the low-temperature cycling capacity retention rate and reduce the cycling resistance growth rate and thickness swelling rate of the lithium-ion batteries.

Table 2 shows parameters and evaluation results of Examples 9 to 19 and Comparative examples 11 to 25.

**Table 2**

| | Additive I | | Additive II | | Additive III | | a, b, c | | Capacity retention rate at -10°C (%) | Cycling resistance growth rate (%) | Thickness swelling rate (%) |
|---|---|---|---|---|---|---|---|---|---|---|---|
| | Material | Mass percentage (%) | Material | Mass percentage (%) | Material | Mass percentage (%) | Percentage relationship | Ratio | | | |
| Comparative example 11 | formula 1a | 0.1 | - | | - | | | | 70.5 | 41.3 | 29.2 |
| Comparative example 12 | formula 1b | 0.7 | - | | - | | | | 73.1 | 37.8 | 26.5 |
| Comparative example 13 | $LiPO_2F_2$ | 0.95 | - | | - | | | | 73.9 | 36.3 | 25.1 |
| Comparative example 14 | formula 1a | 1.6 | - | | - | | | | 77.3 | 33.5 | 22.3 |
| Comparative example 15 | formula 1a | 3.2 | - | | - | | | | 76.7 | 34.6 | 23.4 |
| Comparative example 16 | formula 1a | 4.1 | - | | - | | | | 75.9 | 36.2 | 23.8 |
| Comparative example 17 | - | | $LiSO_3F$ | 0.03 | - | | | | 68.5 | 41.8 | 29.7 |
| Comparative example 18 | - | | $LiSO_3F$ | 0.6 | - | | | | 72.5 | 38.4 | 27.1 |
| Comparative example 19 | - | | LiFSI | 1.3 | - | | | | 73.7 | 36.9 | 25.6 |
| Comparative example 20 | - | | LiFSI | 1.9 | - | | | | 76.8 | 34.1 | 22.7 |
| Comparative example 21 | - | | $LiSO_3F$ | 3 | - | | | | 75.3 | 34.9 | 24.3 |
| Comparative example 22 | - | | - | | $LiBF_4$ | 0.08 | | | 69.2 | 37.5 | 29.3 |
| Comparative example 23 | - | | - | | $LiBF_4$ | 0.4 | | | 71.9 | 38.7 | 27.5 |
| Comparative example 24 | - | | - | | $LiBF_4$ | 1.4 | | | 76.5 | 34.7 | 23.1 |

(continued)

| | Additive I | | Additive II | | Additive III | | a, b, c | | Capacity retention rate at -10°C (%) | Cycling resistance growth rate (%) | Thickness swelling rate (%) |
|---|---|---|---|---|---|---|---|---|---|---|---|
| | Material | Mass percentage (%) | Material | Mass percentage (%) | Material | Mass percentage (%) | Percentage relationship | Ratio | | | |
| Comparative example 25 | - | | - | | $LiBF_4$ | 2.9 | | | 74.2 | 36.5 | 24.8 |
| Example 9 | formula 1a | 0.1 | LiTFSI | 1.0 | - | | a/b | 0.1 | 77.5 | 32.9 | 21.4 |
| Example 10 | $LiPO_2F_2$ | 1.6 | LiFSI | 0.2 | - | | a/b | 8 | 80.1 | 30.2 | 18.3 |
| Example 11 | formula 1a | 1.6 | $LiSO_3F$ | 0.1 | - | | a/b | 16 | 79.7 | 30.4 | 18.9 |
| Example 12 | formula 1a | 3.2 | LiTFSI | 0.1 | - | | a/b | 32 | 78.5 | 31.8 | 19.6 |
| Example 13 | formula 1a | 2.5 | LiFSI | 0.05 | - | | a/b | 50 | 77.8 | 32.6 | 21.9 |
| Example 14 | - | | LiTFSI | 1.0 | $LiBF_4$ | 0.1 | b/c | 10 | 76.9 | 32.4 | 21.9 |
| Example 15 | - | | LiFSI | 2.0 | LiDFOB | 0.1 | b/c | 20 | 78.4 | 31.2 | 19.5 |
| Example 16 | | | LiFSI | 4.0 | LiDFOB | 0.1 | b/c | 40 | 77.5 | 31.9 | 20.8 |
| Example 17 | formula 1b | 2.5 | - | | $LiBF_4$ | 0.5 | a/c | 5 | 77.9 | 32.1 | 20.2 |
| Example 18 | $LiPO_2F_2$ | 3.0 | - | | $LiBF_4$ | 0.1 | a/c | 30 | 78.2 | 31.9 | 19.8 |
| Example 19 | formula 1b | 4.5 | - | | $LiBF_4$ | 0.1 | a/c | 45 | 77.1 | 32.3 | 22.1 |
| "-" indicates that such material is not added. | | | | | | | | | | | |

From the comparison between Comparative examples 11 to 16, it can be learned that as the mass percentage of the additive I in the electrolyte increases, the capacity retention rate of the lithium-ion battery firstly increases and then decreases, the cycling resistance growth rate firstly decreases and then increases, and the thickness swelling rate firstly decreases and then increases. From the comparison between Comparative examples 17 to 21, it can be learned that as the mass percentage of the additive II in the electrolyte increases, the capacity retention rate of the lithium-ion battery firstly increases and then decreases, the cycling resistance growth rate firstly decreases and then increases, and the thickness swelling rate firstly decreases and then increases. From the comparison between Comparative examples 22 to 25, it can be learned that as the mass percentage of the additive III in the electrolyte increases, the capacity retention rate of the lithium-ion battery firstly increases and then decreases, the cycling resistance growth rate firstly increases and then decreases, and the thickness swelling rate firstly decreases and then increases.

From the comparison between Examples 9 to 13, it can be learned that as a/b increases, the capacity retention rate of the lithium-ion battery firstly increases and then decreases, the cycling resistance growth rate firstly decreases and then increases, and the thickness swelling rate firstly decreases and then increases. From the comparison between Examples 14 to 16, it can be learned that as b/c increases, the capacity retention rate of the lithium-ion battery firstly increases and then decreases, the cycling resistance growth rate firstly decreases and then increases, and the thickness swelling rate firstly decreases and then increases. From the comparison between Examples 17 to 19, it can be learned that as a/c increases, the capacity retention rate of the lithium-ion battery firstly increases and then decreases, the cycling resistance growth rate firstly decreases and then increases, and the thickness swelling rate firstly decreases and then increases.

Table 3 shows parameters and evaluation results of Examples 20 to 34. In Examples 20 to 34, an organic solvent EP or PP was additionally added.

**Table 3**

| | Organic solvent | | Additive I | | Additive II | | Additive III | | Capacity retention rate at -10°C (%) | Cycling resistance growth rate (%) | Thickness swelling rate (%) |
|---|---|---|---|---|---|---|---|---|---|---|---|
| | Material | Mass percentage (%) | Material | Mass percentage (%) | Material | Mass percentage (%) | Material | Mass percentage (%) | | | |
| Example 20 | EP | 20 | $LiPO_2F_2$ | 1.0 | LiTFSI | 0.1 | - | | 78.5 | 31.2 | 20.4 |
| Example 21 | EP | 24 | formula 1a | 1.0 | LiFSI | 0.1 | - | | 78.9 | 30.8 | 19.6 |
| Example 22 | EP | 30 | formula 1a | 1.0 | $LiSO_3F$ | 0.1 | - | | 80.3 | 30.1 | 18.2 |
| Example 23 | EP | 32 | $LiPO_2F_2$ | 1.0 | LiTFSI | 0.1 | - | | 80.5 | 29.6 | 17.9 |
| Example 24 | EP | 36 | formula 1a | 1.0 | LiFSI | 0.1 | - | | 81.1 | 29.3 | 17.5 |
| Example 25 | EP | 40 | - | | LiTFSI | 1.0 | $LiBF_4$ | 0.1 | 81.5 | 28.7 | 17.3 |
| Example 26 | EP | 43 | - | | LiFSI | 1.0 | LiDFOB | 0.1 | 81.3 | 28.9 | 17.6 |
| Example 27 | EP | 47 | formula 1a | 1.0 | - | | $LiBF_4$ | 0.1 | 80.7 | 29.4 | 17.8 |
| Example 28 | EP | 50 | formula 1a | 1.0 | - | | LiDFOB | 0.1 | 80.2 | 30.3 | 18.5 |
| Example 29 | EP | 58 | $LiPO_2F_2$ | 1.0 | - | | $LiBF_4$ | 0.1 | 78.4 | 31.5 | 20.3 |
| Example 30 | EP | 60 | formula 1a | 1.0 | - | | LiDFOB | 0.1 | 78.3 | 31.7 | 20.6 |
| Example 31 | PP | 32 | formula 1a | 1.0 | LiTFSI | 0.1 | - | | 80.6 | 29.7 | 17.8 |
| Example 32 | PP | 36 | $LiPO_2F_2$ | 1.0 | LiFSI | 0.1 | - | | 80.9 | 29.5 | 17.6 |
| Example 33 | PP | 43 | - | | LiFSI | 1.0 | LiDFOB | 0.1 | 81.2 | 28.6 | 17.4 |
| Example 34 | PP | 47 | formula 1a | 1.0 | - | | $LiBF_4$ | 0.1 | 80.4 | 29.8 | 17.5 |

"-" indicates that such material is not added.

The introduction of the organic solvent ethyl propionate or propyl propionate can further improve the low-temperature capacity retention rate and reduce the cycling resistance growth rate and thickness swelling rate of the lithium-ion battery.

Table 4 shows parameters and evaluation results of Examples 35 to 42. In Examples 35 to 42, an additive IV was additionally added.

**Table 4**

| | Additive IV | Organic solvent | | Additive I | | Additive II | | Additive III | | Capacity retention rate at -10°C (%) | Cycling resistance growth rate (%) | Thickness swelling rate (%) |
|---|---|---|---|---|---|---|---|---|---|---|---|---|
| | Mass percentage (%) | Material | Mass percentage (%) | Material | Mass percentage (%) | Material | Mass percentage (%) | Material | Mass percentage (%) | | | |
| Example 35 | 0.1 | EP | 36 | formula 1a | 1.0 | LiTFSI | 0.1 | - | | 82.1 | 28.5 | 17.2 |
| Example 36 | 0.8 | EP | 36 | formula 1b | 1.0 | $LiSO_3F$ | 0.1 | - | | 83.9 | 27.3 | 16.5 |
| Example 37 | 1.2 | EP | 36 | formula 1b | 1.0 | LiTFSI | 0.1 | - | | 84.7 | 25.9 | 15.8 |
| Example 38 | 1.6 | EP | 36 | $LiPO_2F_2$ | 1.0 | LiFSI | 0.1 | - | | 85.3 | 25.6 | 15.1 |
| Example 39 | 1.9 | PP | 36 | - | | LiTFSI | 1.0 | $LiBF_4$ | 0.1 | 84.9 | 25.8 | 15.5 |
| Example 40 | 2.3 | PP | 36 | - | | LiFSI | 1.0 | LiDFOB | 0.1 | 83.7 | 24.1 | 16.3 |
| Example 41 | 2.7 | PP | 36 | formula 1b | 1.0 | - | | $LiBF_4$ | 0.1 | 82.6 | 24.4 | 16.5 |
| Example 42 | 3.1 | PP | 36 | formula 1b | 1.0 | - | | LiDFOB | 0.1 | 82.3 | 28.4 | 17.1 |

"-" indicates that such material is not added.

The introduction of the additive IV can further improve the low-temperature capacity retention rate and reduce the cycling resistance growth rate and thickness swelling rate of the lithium-ion battery. The additive IV can decompose to form a stable passivation film on the surface of the negative electrode, and the passivation film has good lithium ion transport properties and remains stable under low-temperature and high-temperature conditions. Therefore, gas production is inhibited, and improved cycling performance and swelling suppression performance are exhibited.

The foregoing descriptions are merely preferred examples of this application and illustrations of the technical principles used. Persons skilled in the art should understand that the scope of disclosure involved in this application is not limited to the technical solutions formed by a specific combination of the foregoing technical features, and should also cover other technical solutions formed by any combination of the foregoing technical features or their equivalent features, for example, a technical solution formed by replacement between the foregoing features and technical features having similar functions disclosed in this application.

## Claims

**1.** An electrolyte, wherein the electrolyte comprises at least two of an additive I, an additive II, or an additive III;

the additive I is at least one additive selected from a group consisting of a compound represented by the following formula 1a, a compound represented by the following formula 1b, and lithium difluorophosphate;

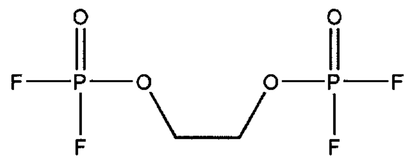

formula 1a;

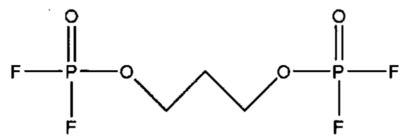

formula 1b;

the additive II is at least one additive selected from a group consisting of lithium fluorosulfonate, difluorosulfonimide, and bistrifluoromethane sulfonimide; and
the additive III is at least one additive selected from a group consisting of lithium difluorooxalate borate, lithium bisoxalate borate, and lithium tetrafluoroborate.

**2.** The electrolyte according to claim 1, satisfying at least one of the following:

(1) the additive I comprises the compound represented by formula 1a, and the additive II comprises lithium fluorosulfonate;
(2) the additive I comprises the compound represented by formula 1a, and the additive II comprises difluorosulfonimide; or
(3) the additive I comprises the compound represented by formula 1a, and the additive II comprises bistrifluoromethane sulfonimide.

**3.** The electrolyte according to claim 1, satisfying at least one of the following:

(4) the additive I comprises the compound represented by formula 1a, and the additive III comprises lithium difluorooxalate borate;
(5) the additive I comprises the compound represented by formula 1a, and the additive III comprises lithium bisoxalate borate; or
(6) the additive I comprises the compound represented by formula 1a, and the additive III comprises lithium tetrafluoroborate.

**4.** The electrolyte according to claim 1, satisfying at least one of the following:

(7) the additive I comprises the compound represented by formula 1b, and the additive II comprises lithium fluorosulfonate;
(8) the additive I comprises the compound represented by formula 1b, and the additive II comprises difluorosulfonimide; or
(9) the additive I comprises the compound represented by formula 1b, and the additive II comprises bistrifluoromethane sulfonimide.

**5.** The electrolyte according to claim 1, satisfying at least one of the following:

(10) the additive I comprises the compound represented by formula 1b, and the additive III comprises lithium difluorooxalate borate;
(11) the additive I comprises the compound represented by formula 1b, and the additive III comprises lithium bisoxalate borate; or
(12) the additive I comprises the compound represented by formula 1b, and the additive III comprises lithium tetrafluoroborate.

**6.** The electrolyte according to claim 1, satisfying at least one of the following:

(13) the additive I comprises lithium difluorophosphate, and the additive II comprises lithium fluorosulfonate;
(14) the additive I comprises lithium difluorophosphate, and the additive II comprises difluorosulfonimide; or
(15) the additive I comprises lithium difluorophosphate, and the additive II comprises bistrifluoromethane sulfonimide.

**7.** The electrolyte according to claim 1, satisfying at least one of the following:

(16) the additive I comprises lithium difluorophosphate, and the additive III comprises lithium difluorooxalate borate;
(17) the additive I comprises lithium difluorophosphate, and the additive III comprises lithium bisoxalate borate; or
(18) the additive I comprises lithium difluorophosphate, and the additive III comprises lithium tetrafluoroborate.

**8.** The electrolyte according to claim 1, satisfying at least one of the following:

(1) a mass percentage of the additive I in the electrolyte is a, and $0.01\% \leq a \leq 5\%$;
(2) a mass percentage of the additive II in the electrolyte is b, and $0.01\% \leq b \leq 5\%$; or
(3) a mass percentage of the additive III in the electrolyte is c, and $0.01\% \leq c \leq 5\%$.

**9.** The electrolyte according to claim 8, satisfying at least one of the following:

(1) a is 0.1%, 0.2%, 0.3%, 1%, 1.6%, 2.5%, 3%, 3.2%, or within a range defined by any two of the values;
(2) b is 0.05%, 0.1%, 0.2%, 0.3%, 1%, 1.3%, 2%, or within a range defined by any two of the values; or
(3) c is 0.05%, 0.1%, 0.2%, or within a range defined by any two of the values.

**10.** The electrolyte according to claim 1, satisfying at least one of the following:

(1) when the electrolyte comprises the additive I and the additive II, $0.1 \leq a/b \leq 50$;
(2) when the electrolyte comprises the additive II and the additive III, $0.1 \leq b/c \leq 50$; or
(3) when the electrolyte comprises the additive I and the additive III, $0.1 \leq a/c \leq 50$.

**11.** The electrolyte according to claim 1, satisfying at least one of the following:

(1) when the electrolyte comprises the additive I and the additive II, $0.1 \leq a/b \leq 40$;
(2) when the electrolyte comprises the additive II and the additive III, $0.1 \leq b/c \leq 40$; or
(3) when the electrolyte comprises the additive I and the additive III, $0.5 \leq a/c \leq 45$.

**12.** The electrolyte according to claim 1, wherein the electrolyte further comprises an organic solvent, wherein the organic solvent comprises at least one of ethyl propionate or propyl propionate, wherein a mass percentage of ethyl propionate in the electrolyte is 20% to 60%, and a mass percentage of propyl propionate in the electrolyte is 32% to 47%.

**13.** The electrolyte according to claim 1, wherein the electrolyte further comprises an additive IV represented by formula 2,

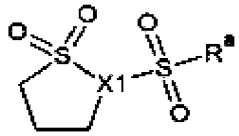

formula 2,

wherein X1 is CH or N, $R^a$ is a substituted or unsubstituted $C_1$-$C_{20}$ alkyl group; and
a mass percentage of the additive IV in the electrolyte is 0.01% to 4%, preferably 1.2% to 1.9%.

**14.** An electrochemical apparatus, comprising the electrolyte according to any one of claims 1 to 13.

**15.** An electronic apparatus, comprising the electrochemical apparatus according to claim 14.

**INTERNATIONAL SEARCH REPORT**

International application No. **PCT/CN2023/114966**

**A. CLASSIFICATION OF SUBJECT MATTER**

H01M10/0567(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M10/-

Documentation searched other than minimum documentation to the extent that such documents are included in the fields searched

Electronic data base consulted during the international search (name of data base and, where practicable, search terms used)

STN, CNTXT, ENTXTC, DWPI: 电池, 电解液, 电解质, 添加剂, 二氟磷酸锂, LiPO2F2, 氟磺酸锂, LiSO3F, 双氟磺酰亚胺, LiFSI, 双三氟甲烷磺酰亚胺, LiTFSI, 二氟草酸硼酸锂, LiDFOB, 双草酸硼酸锂, LiBOB, 四氟硼酸锂, LiBF4, battery, electrolyte, additive+

**C. DOCUMENTS CONSIDERED TO BE RELEVANT**

| Category* | Citation of document, with indication, where appropriate, of the relevant passages | Relevant to claim No. |
|---|---|---|
| X | CN 113809399 A (NINGDE AMPEREX TECHNOLOGY LTD.) 17 December 2021 (2021-12-17)<br>description, paragraph [0004], and embodiment 45 | 1, 7-12, 14, 15 |
| Y | CN 113809399 A (NINGDE AMPEREX TECHNOLOGY LTD.) 17 December 2021 (2021-12-17)<br>description, paragraph [0004], and embodiment 45 | 13 |
| X | CN 106099171 A (DONGUAN KAIXIN BATTERY MATERIAL CO., LTD.) 09 November 2016 (2016-11-09)<br>description, paragraphs [0006]-[0008], and embodiments 1-3 | 1, 6-12, 14, 15 |
| Y | CN 106099171 A (DONGUAN KAIXIN BATTERY MATERIAL CO., LTD.) 09 November 2016 (2016-11-09)<br>description, paragraphs [0006]-[0008], and embodiments 1-3 | 13 |
| X | CN 109891654 A (LG CHEMICAL LTD.) 14 June 2019 (2019-06-14)<br>description, paragraphs [0016]-[0039], [0137], and [0115]-[0121] | 1-5, 8-12, 14, 15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/114966**

**C. DOCUMENTS CONSIDERED TO BE RELEVANT**

| Category* | Citation of document, with indication, where appropriate, of the relevant passages | Relevant to claim No. |
|---|---|---|
| Y | CN 109891654 A (LG CHEMICAL LTD.) 14 June 2019 (2019-06-14) description, paragraphs [0016]-[0039], [0137], and [0115]-[0121] | 13 |
| Y | CN 110350244 A (SAMSUNG SDI CO., LTD.) 18 October 2019 (2019-10-18) description, paragraphs [0009]-[0013] and [0021]-[0030] | 13 |
| X | US 2021328266 A1 (LG ENERGY SOLUTION LTD.) 21 October 2021 (2021-10-21) description, embodiments 1-2 | 1, 7-12, 14, 15 |
| Y | US 2021328266 A1 (LG ENERGY SOLUTION LTD.) 21 October 2021 (2021-10-21) description, embodiments 1-2 | 13 |

Form PCT/ISA/210 (second sheet) (July 2022)

**INTERNATIONAL SEARCH REPORT**
**Information on patent family members**

International application No.
**PCT/CN2023/114966**

| Patent document cited in search report | Publication date (day/month/year) | Patent family member(s) | Publication date (day/month/year) |
|---|---|---|---|
| CN 113809399 A | 17 December 2021 | None | |
| CN 106099171 A | 09 November 2016 | None | |
| CN 109891654 A | 14 June 2019 | EP 3512028 A1 | 17 July 2019 |
| | | EP 3512028 A4 | 15 April 2020 |
| | | EP 3512028 B1 | 28 September 2022 |
| | | ES 2929134 T3 | 25 November 2022 |
| | | JP 2019536239 A | 12 December 2019 |
| | | JP 7034404 B2 | 14 March 2022 |
| | | HUE 060696 T2 | 28 April 2023 |
| | | US 2019245244 A1 | 08 August 2019 |
| | | US 11063296 B2 | 13 July 2021 |
| | | KR 20190004232 A | 11 January 2019 |
| | | KR 102477644 B1 | 15 December 2022 |
| | | PL 3512028 T3 | 19 December 2022 |
| CN 110350244 A | 18 October 2019 | US 2019312308 A1 | 10 October 2019 |
| | | US 11031629 B2 | 08 June 2021 |
| US 2021328266 A1 | 21 October 2021 | KR 20200074902 A | 25 June 2020 |
| | | KR 102474678 B1 | 08 December 2022 |
| | | WO 2020130575 A1 | 25 June 2020 |
| | | EP 3879617 A1 | 15 September 2021 |
| | | EP 3879617 A4 | 26 January 2022 |

Form PCT/ISA/210 (patent family annex) (July 2022)